# FASCICULE DE BREVET EUROPEEN

(11) **EP 2 558 729 B1**
(45) Date de publication et mention de la délivrance du brevet: **08.08.2018**
(21) Numéro de dépôt: 11720317.4
(22) Date de dépôt: 04.04.2011
(51) Int. Cl.: F04D 29/54, F04D 29/64, F01D 9/04

(54) **DISPOSITIF REDRESSEUR POUR TURBOMACHINE**
GLEICHRICHTER FÜR EINE TURBOMASCHINE
FLOW STRAIGHTENER DEVICE FOR TURBOMACHINE

(30) Priorité: 14.04.2010 FR 1052857
(43) Date de publication de la demande: 20.02.2013
(73) Titulaire: Safran Aircraft Engines, 75015 Paris (FR)
(72) Inventeur: PERROLLAZ, Jean Marc Claude, 77850 Hericy (FR)
(74) Mandataire: Lebkiri, Alexandre
(86) Numéro de dépôt international: PCT/FR2011/050749
(87) Numéro de publication internationale: WO 2011/128551

(56) Documents cités:
- EP-A1- 1 908 923
- FR-A1- 2 636 378
- FR-A1- 2 846 997

## Description

La présente invention concerne un dispositif redresseur pour turbomachine et plus particulièrement pour turboréacteur à double flux.

Un turboréacteur à double flux pour la propulsion d'avion comporte généralement une soufflante amont délivrant un flux d'air annulaire. Ce flux d'air annulaire est divisé par un moyeu intermédiaire annulaire en un flux primaire qui alimente un moteur entraînant la soufflante et un flux secondaire qui est éjecté dans l'atmosphère tout en fournissant une fraction importante de la poussée du turboréacteur. La soufflante est contenue dans un carter de soufflante délimitant extérieurement le flux secondaire.

En aval de cette soufflante, entre le carter de soufflante et le moyeu intermédiaire, sont positionnées d'amont en aval des aubes de redresseur pour redresser le flux secondaire dans l'axe du moteur et des bras structuraux permettant de solidariser le moyeu intermédiaire au carter de soufflante.

Selon une réalisation décrite dans le document EP 1 908 923, une aube de redresseur comporte généralement une plateforme de fixation, une pale et un pied de pale. Le carter de soufflante comprend une gorge circonférentielle, ménagée dans sa paroi interne, apte à recevoir la plateforme de fixation. Cette dernière est maintenue dans la gorge au moyen de deux vis. Ces vis de fixation sont vissées dans la plateforme, respectivement de chaque côté des flancs de l'aube. A son extrémité inférieure, le pied de l'aube est retenu par engagement dans une ouverture ménagée dans le moyeu intermédiaire.

Selon une réalisation décrite dans le document FR 2 636 378, une aube de redresseur comporte une plateforme de recouvrement qui couvre les moyens de fixation de l'aube de redresseur.

Pour respecter le profil de la veine secondaire formée par le moyeu intermédiaire et le carter de soufflante, des lamages aptes à recevoir les têtes des vis sont réalisés dans la plateforme de fixation. Plus précisément, ces lamages permettent d'éviter que les têtes de vis ne débouchent dans la veine secondaire. De façon à reconstruire le profil de la veine secondaire, on recouvre les têtes de vis et les lamages au moyen d'un élastomère.

Un inconvénient de ce type de réalisation réside dans le fait qu'à terme l'élastomère se détache et laisse place aux lamages ainsi qu'aux têtes de vis. Bien que ces dernières ne débordent pas dans la veine secondaire, le flux secondaire s'engouffre dans les lamages et créé des perturbations aérodynamiques.

Par ailleurs, un bras structural comporte à chacune de ses extrémités une plateforme de fixation comportant des ouvertures. Une de ses extrémités est solidarisée au carter de soufflante et l'autre de ses extrémités est solidarisée au moyeu intermédiaire par des vis.

De façon similaire aux aubes de redresseur, pour respecter le profil de la veine secondaire formé par le moyeu intermédiaire et le carter de soufflante, des lamages aptes à recevoir les têtes des vis sont réalisés dans les plateformes de fixation. Pour reconstruire le profil de la veine secondaire, on recouvre les têtes de vis et les lamages au moyen d'un élastomère.

De la même façon que les aubes de redresseurs, à terme l'élastomère se détache et laisse place aux lamages ainsi qu'aux têtes de vis. Le flux secondaire s'engouffre alors dans les lamages créant des perturbations aérodynamiques.

De surcroît, l'utilisation de redresseurs pour redresser le flux secondaire dans l'axe du moteur et l'utilisation de bras structuraux pour assurer la solidarisation du moyeu intermédiaire au carter de soufflante confère un poids élevé au turboréacteur.

Dans ce contexte, l'invention se propose de résoudre les problèmes de l'art antérieur précités. En outre, l'invention vise à fournir d'une part, un dispositif redresseur conférant un profil aérodynamique à une veine dont l'aérodynamisme reste inchangé dans le temps et d'autre part, une turbomachine dont le poids est diminué.

A cette fin, l'invention porte sur un dispositif redresseur pour turbomachine comportant :
- une virole interne et une virole externe entourant ladite virole interne, au moins une desdites virole interne ou virole externe présentant des premiers orifices ;
- au moins deux aubes de redresseur comportant chacune à au moins une même première extrémité une plateforme de fixation présentant des deuxièmes orifices positionnés en regard desdits premiers orifices ; lesdites au moins deux aubes étant assemblées à au moins une desdites virole interne ou virole externe par au moins un premier moyen de fixation introduit dans lesdits premiers orifices et lesdits deuxièmes orifices.

Ledit dispositif redresseur comporte en outre une plateforme de recouvrement recouvrant ledit au moins un premier moyen de fixation.

Grâce à la plateforme de recouvrement, aucun élément du dispositif redresseur pour turbomachine selon l'invention ne débouche dans la veine d'écoulement du flux d'air qui reçoit le dispositif redresseur. Au contraire, grâce à l'invention, le profil de la veine est respecté et est parfaitement lisse.

En outre, comme chaque aube est solidarisée à une première extrémité à une virole interne et à une deuxième extrémité à une virole externe, les bras structuraux que comportent les turbomachines de l'art antérieur ne sont plus nécessaires. Le poids de la turbomachine équipée d'un tel dispositif est donc diminué. De surcroît, l'assemblage est facilité par l'absence de bras structuraux. En outre, ladite plateforme de recouvrement comporte :
- une surface supérieure formant un plan de recouvrement au niveau duquel circule de l'air ;
- une surface inférieure formant un plan de fixation, ledit plan de fixation comportant au moins une encoche apte à coopérer avec ledit au moins un premier moyen de fixation pour assurer le maintien de ladite plateforme de recouvrement.

Outre les caractéristiques principales qui viennent d'êtres mentionnées dans le paragraphe précédent, le dispositif redresseur pour turbomachine selon l'invention peut présenter une ou plusieurs caractéristiques supplémentaires ci-dessous, considérées individuellement ou selon toutes les combinaisons techniquement réalisables :
- ladite plateforme de recouvrement comporte un tenon situé à une extrémité amont de ladite plateforme de recouvrement, ledit tenon étant inséré dans une gorge que comporte un élément solidaire de ladite virole interne ou de ladite virole externe ;
- un deuxième moyen de fixation est positionné dans ladite gorge, ledit deuxième moyen de fixation recevant ledit tenon ;
- ledit deuxième moyen de fixation présente un bossage ;
- ledit premier moyen de fixation est une vis ;
- ladite plateforme de recouvrement est en matériau composite ;
- ledit dispositif redresseur comporte une pluralité d'aubes disposées radialement aux dites virole interne et virole externe ;

L'invention concerne également une turbomachine comportant un dispositif redresseur conforme à l'une au moins des réalisations précitées.

L'invention porte aussi sur un procédé d'assemblage d'un dispositif redresseur selon l'une des réalisations précitées, ledit procédé d'assemblage comportant les étapes successives suivantes :
- positionner lesdits deuxièmes orifices desdites plateformes de fixation desdites au moins deux aubes en regard desdits premiers orifices ;
- maintenir lesdites plateformes de fixation sur au moins une desdites virole interne ou virole externe avec ledit au moins un premier moyen de fixation ;
- insérer ledit tenon de ladite plateforme de recouvrement dans ladite gorge dudit anneau ;
- solidariser ladite au moins une première virole ou deuxième virole, lesdites plateformes de fixation et ladite plateforme de recouvrement avec ledit au moins un moyen de fixation.

Par ailleurs, le procédé d'assemblage selon l'invention peut comporter, préalablement à ladite étape d'insertion, une étape de positionnement dudit deuxième moyen de fixation.

D'autres caractéristiques et avantages de l'invention ressortiront clairement de la description qui en est donnée ci-après, à titre indicatif et nullement limitatif, en référence aux figures annexées ci-jointes parmi lesquelles :
- la figure 1 représente, de manière schématique, une turbomachine comportant un dispositif redresseur selon l'invention ;
- la figure 2 représente une partie d'une aube que comporte un dispositif redresseur conforme à l'invention ;
- la figure 3 illustre une plateforme de recouvrement que comporte un dispositif redresseur selon l'invention ;
- la figure 4 représente une plateforme de recouvrement conforme à celle illustrée sur la figure 3, ladite plateforme de recouvrement étant montée sur le dispositif redresseur conforme à l'invention ;
- la figure 5 illustre l'assemblage de deux éléments d'un dispositif redresseur selon l'invention ;
- la figure 6 représente les deux éléments illustré à la figure 5, les deux éléments étant assemblés ;
- la figure 7 illustre l'assemblage de plusieurs éléments d'un dispositif redresseur conforme à l'invention ;
- la figure 8 représente les éléments assemblés illustrés sur la figure 7 ;
- la figure 9 illustre schématiquement les différentes étapes d'un procédé d'assemblage du dispositif redresseur conforme à l'invention.

Pour des raisons de clarté, seuls les éléments essentiels pour la compréhension de l'invention ont été représentés, et ceci sans respect de l'échelle et de manière schématique. En outre, les éléments identiques qui se retrouvent sur différentes figures portent les mêmes références.

Pour la suite de la description, étant entendu que l'air pénètre par le côté amont du turboréacteur (ou turbomachine) pour se diriger vers le côté aval de ce dernier, chaque élément étant désigné par une référence « X », le côté amont de chaque élément est désigné par la référence « X » suivie d'une unique apostrophe ; le côté aval de chaque élément est désigné par la référence « X » suivie de deux apostrophes.

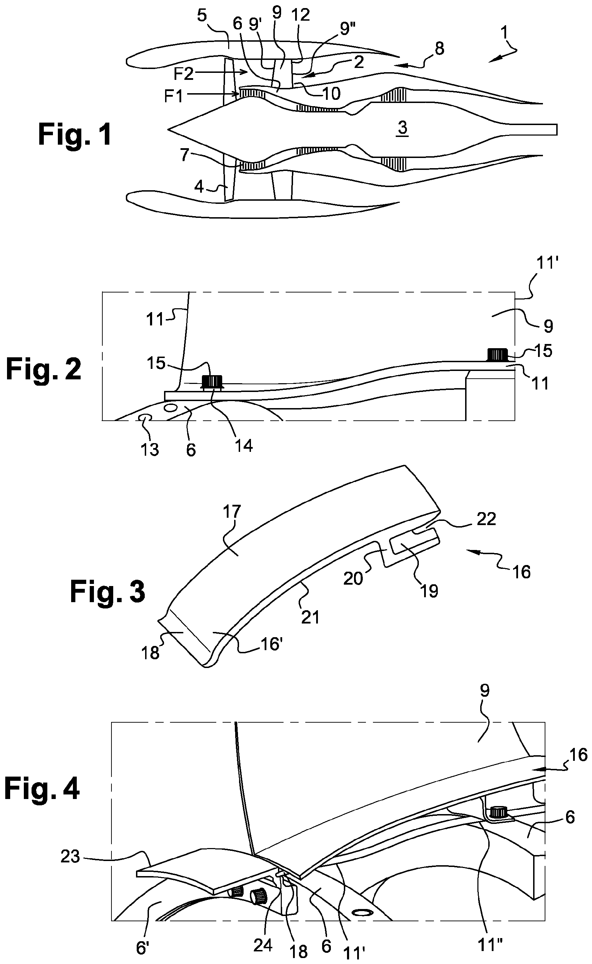

La figure 1 représente de façon schématique un turboréacteur 1 à double flux. Ce turboréacteur 1 à double flux comporte notamment un dispositif redresseur 2 conforme à l'invention. Le turboréacteur 1 comporte en outre un moteur 3 à l'avant duquel est placée une soufflante 4, ce moteur 3 étant entouré par une virole externe 5 (formant dans l'exemple représenté un carter de soufflante). Une virole interne 6 (formant dans l'exemple représenté un moyeu intermédiaire annulaire) est placé autour du moteur 3 et à l'intérieur de la virole externe 5. A l'intérieur de ce turboréacteur 1 à double flux, le flux d'air entrant expulsé par la soufflante 4 se divise en un flux primaire F1 qui traverse un compresseur basse pression 7 dont les aubes sont disposées entre le moteur 3 et la virole interne 6 et un flux secondaire F2 qui passe entre la virole interne 6 et la virole externe 5. Une veine secondaire 8 est formée par l'espace annulaire situé entre la virole interne 6 et la virole externe 5. Des aubes 9 de redresseur que comporte le dispositif redresseur 2 sont placées entre la virole interne 6 et la virole externe 5. Ces aubes 9 de redresseur comportent un côté amont 9' et un côté aval 9".

En fonctionnement, la soufflante 4 délivre un flux d'air annulaire avec une partie annulaire centrale, primaire, qui alimente le moteur 3 entraînant la soufflante 4 et une partie annulaire extérieure, secondaire, qui est éjectée dans l'atmosphère tout en fournissant une fraction importante de la poussée du turboréacteur 1.

En conformité avec le dispositif redresseur 2 de l'invention, l'aube 9 de redresseur comporte à une première extrémité 10, une plateforme de fixation 11 et à une deuxième extrémité 12, une plateforme fixation 11. Chaque plateforme de fixation 11 comporte un côté amont 11' et un côté aval 11".

La figure 2 illustre une partie d'une aube 9 de redresseur, laquelle aube 9 est fixée sur la virole interne 6. La virole interne 6 présente une pluralité de premiers orifices 13 radiaux.

Plus particulièrement, l'aube 9 comporte à sa première extrémité 10, la plateforme de fixation 11. Cette plateforme de fixation 11 présente quatre deuxièmes orifices 14 (dont uniquement deux sont représentés). Selon une telle réalisation, de chaque côté des flancs de l'aube 9, la plateforme de fixation 11 présente deux deuxièmes orifices 14.

Les deuxièmes orifices 14 sont positionnés en regard des premiers orifices 13 de façon à pouvoir solidariser la plateforme de fixation 11 à la virole interne 6. A cette fin, des premiers moyens 15 de fixation sont utilisés pour solidariser la plateforme de fixation 11 à la virole interne 6.

Dans notre exemple et pour la suite de la description, les premiers moyens 15 de fixation sont des vis.

A sa deuxième extrémité 12, l'aube 9 comporte également une plateforme de fixation 11 similaire à celle présentée ci-dessus, cette deuxième extrémité 12 étant solidarisée à la virole externe 5 de façon similaire.

Avantageusement, une solidarisation de l'aube 9 avec la virole interne 6 et avec la virole externe 5 confère deux fonctions à l'aube 9 de redresseur.

Une première fonction, déjà connue, consiste à redresser le flux secondaire, délivré par la soufflante 4, dans l'axe du moteur 3 du turboréacteur 1.

Une deuxième fonction, nouvelle, consiste à solidariser la virole interne 6 à la virole externe 5, cette fonction étant remplie auparavant par des bras structuraux.

Avantageusement, selon une telle réalisation, les bras structuraux que comportent les turboréacteurs de l'état de la technique ne sont plus nécessaires. L'invention fournie donc des turboréacteurs 1 dont le poids est diminué.

En outre, puisque les bras structuraux ne sont plus nécessaires, le coût est également diminué et l'assemblage facilité.

Toutefois, les têtes des vis 15 dépassent des plateformes de fixation 11 et le profil de la veine secondaire 8 formé par la virole externe 5 et la virole interne 6 est modifié. Les têtes de vis 15 risquent de perturber le flux d'air circulant dans la veine secondaire 8.

Comme représenté sur la figure 3, pour pallier cet inconvénient, le dispositif redresseur 2 comporte une plateforme de recouvrement 16.

La plateforme de recouvrement 16 comporte :
- une surface supérieure formant un plan de recouvrement 17, le plan de recouvrement 17 possédant une forme adaptée pour épouser le profil de la veine secondaire 8 ;
- un tenon 18 situé à une extrémité amont 16' de la plateforme de recouvrement 16 ;
- une surface inférieure formant un plan de fixation 19 relié, par un bras de liaison 20, à la surface inférieure 21 du plan de recouvrement 17. Le plan de fixation 19 comporte au moins une encoche 22 (une seule est représentée) apte à coopérer avec une vis 15 pour assurer le maintien de la plateforme de recouvrement 16.

Comme illustré sur la figure 4, le dispositif redresseur 2 conforme à l'invention comporte en outre un élément 23 solidaire de la virole interne 6 et un élément 23 (non représenté) solidaire de la virole externe 5. Ce premier élément 23 comporte notamment une gorge 24 circonférentielle apte à recevoir le tenon 18. L'élément 23 est positionné à une extrémité amont 6' de la virole interne 6. Un élément 23 (non représenté) est également positionné à une extrémité amont 5' de la virole externe 5.

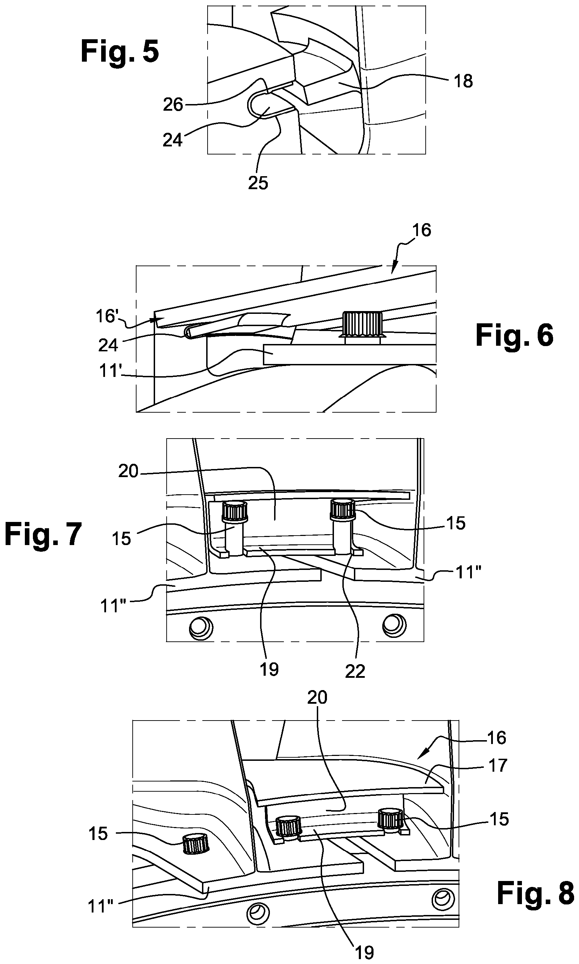

La figure 5 représente la gorge 24. On peut noter qu'un deuxième moyen de fixation 25 est positionné dans la gorge 24, le deuxième moyen de fixation 25 recevant le tenon 18. Ce deuxième moyen de fixation 25 est, dans l'exemple représenté sur la figure 5, une feuille de matériau très mince pouvant être déformée (plus connue sous le nom de clinquant). Le deuxième moyen de fixation 25 présente un bossage apte à se déformer lors de l'insertion du tenon 18 dans la gorge 24 de façon à supprimer le jeu pouvant être présent entre la gorge 24 et le tenon 18.

La figure 6 représente l'extrémité amont 16' de la plateforme de recouvrement 16, cette extrémité amont 16' recouvrant une vis 15. La figure 8 représente, quant à elle, une extrémité aval 16" de la plateforme de recouvrement 16, cette extrémité aval 16" recouvrant deux vis 15 dont chacune participe à la solidarisation d'une aube 9. Chaque vis 15 qui est positionnée à l'extrémité aval 11" d'une plateforme de fixation 11 est insérée dans une encoche 22 puis dans un deuxième orifice 14 pour ensuite être vissée dans un premier orifice 13 situé en regard du deuxième orifice 14.

Le dispositif redresseur 2 conforme à l'invention comporte une pluralité d'aubes 9 de redresseur positionnées radialement à la virole interne 6 et à la virole externe 5 et une pluralité de plateformes de recouvrement 16, chaque plateforme de recouvrement 16 étant positionnée entre deux aubes 9 voisines.

Ainsi, une fois positionnée, chaque plateforme de recouvrement 16 forme une partie du profil de la veine secondaire 8.

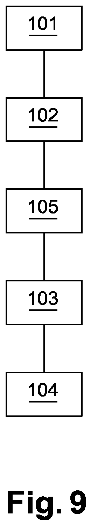

Le procédé d'assemblage d'un dispositif redresseur 2 conforme à l'invention est à présent décrit à l'appui de la figure 9 et des figures 1 à 8.

Pour simplifier la description, on considère qu'un élément 23 est solidaire de la virole interne 6 et un élément 23 est solidaire de la virole externe 5.

Le procédé d'assemblage comporte une première étape de positionnement 101 des deuxièmes orifices 14 des plateformes de fixation 11 des aubes 9 en regard des premiers orifices 13. Dans l'exemple représenté, les deuxièmes orifices 14 de chaque plateforme de fixation 11 située à la première extrémité 10 d'une aube 9 sont positionnés en regard de premiers orifices 13 de la virole interne 6. Les deuxièmes orifices 14 de chaque plateforme de fixation 11 située à la deuxième extrémité 12 d'une aube 9 sont positionnés en regard de deuxièmes orifices 14 de la virole externe 5.

Une deuxième étape consiste à maintenir 102 les plateformes de fixation 11 sur au moins une des virole interne 6 ou virole externe 5 avec au moins un moyen de fixation 15. Plus précisément, des vis 15 sont insérées dans les deuxièmes orifices 14 situés à l'extrémité amont 11' des plateformes de fixation 11 pour être ensuite vissées dans les premiers orifices 12. En revanche, les vis 15 qui doivent être insérées dans les deuxièmes orifices 14 situés à l'extrémité aval 11" des plateformes de fixation 11 seront insérées lors d'une étape ultérieure.

Cette étape de maintien 102 permet de solidariser l'extrémité amont 11' des plateformes de fixation 11 qui sont :
- situées aux premières extrémités 10 des aubes 9 à la virole interne 6 ; et
- situées aux deuxièmes extrémités 12 des aubes 9 à la virole externe 5.

Une troisième étape consiste à insérer 103 le tenon 18 de chaque plateforme de recouvrement 16 dans la gorge 24 de l'élément 23 qui est fixé à la virole interne 6 ou à la virole externe 5. Pour être insérées dans une gorge 24, les plateformes de recouvrement 16 sont basculées vers le côté amont.

Une quatrième étape du procédé consiste à solidariser 104 la virole interne 6, les plateformes de fixation 11 et les plateformes de recouvrement 16. Cette solidarisation est effectuée par l'intermédiaire des moyens de fixation 15. Pour ce faire, les vis 15 sont positionnées en regard des encoches 22 que comporte la plateforme de recouvrement 16. Ces vis 15 sont ensuite insérées dans les deuxièmes orifices 14 puis vissées dans les premiers orifices 13. Lorsque les vis 15 sont vissées elles génèrent, par appui des têtes de vis 15 sur le plan de fixation 19, un basculement aval de la plateforme de recouvrement 16. Lorsque cette plateforme de recouvrement 16 est basculée totalement, le profil de la veine secondaire 8 est parfaitement reconstitué.

Une étape supplémentaire réalisée préalablement à la troisième étape d'insertion 103, consiste à positionner 105 le deuxième moyen de fixation 25 entre la gorge 24 et le tenon 18. Ainsi, lorsque le tenon 18 est inséré dans la gorge 24, le deuxième moyen de fixation 25, qui est formé par une feuille de métal déformable, assure une liaison de type encastrement entre la gorge 24 et le tenon 18.

Le dispositif redresseur selon l'invention trouve une application particulièrement intéressante dans les turbomachines que comportent les moteurs d'avions.

Il est entendu que l'homme du métier est à même de présenter différentes variantes du dispositif redresseur selon l'invention, notamment en ce qui concerne la forme de la plateforme de recouvrement 16, sans pour autant sortir du cadre de l'invention, qui est défini par les revendications suivantes.

## Revendications

1. Dispositif redresseur (2) pour turbomachine (1) comportant :
- une virole interne (6) et une virole externe (5) entourant ladite virole interne (6), ladite virole interne (6) et ladite virole externe (5) formant une veine (8), au moins une desdites virole interne (6) ou virole externe (5) présentant des premiers orifices (13) ;
- au moins deux aubes (9) de redresseur comportant chacune à au moins une même première extrémité (10) une plateforme de fixation (11) présentant des deuxièmes orifices (14) positionnés en regard desdits premiers orifices (13) ; lesdites au moins deux aubes (9) étant assemblées à au moins une desdites virole interne (6) ou virole externe (5) par au moins un premier moyen de fixation (15) introduit dans lesdits premiers orifices (13) et lesdits deuxièmes orifices (14) ;
- une plateforme de recouvrement (16) recouvrant ledit au moins un premier moyen de fixation (15), ladite plateforme de recouvrement (16) comportant une surface supérieure formant un plan de recouvrement (17) au niveau duquel circule de l'air; ledit plan de recouvrement (17) possédant une forme adaptée pour épouser le profil de ladite veine (8);
ledit dispositif redresseur (2) étant **caractérisé en ce que** ladite plateforme de recouvrement (16) comporte une surface inférieure formant un plan de fixation (19), ledit plan de fixation (19) comportant au moins une encoche (22) apte à coopérer avec ledit au moins un premier moyen de fixation (15) pour assurer le maintien de ladite plateforme de recouvrement (16).

2. Dispositif redresseur (2) selon la revendication précédente **caractérisé en ce que** ladite plateforme de recouvrement (16) comporte un tenon (18) situé à une extrémité amont (16') de ladite plateforme de recouvrement (16), ledit tenon (18) étant inséré dans une gorge (24) que comporte un élément (23) solidaire de ladite virole interne (6) ou de ladite virole externe (5).

3. Dispositif redresseur (2) selon la revendication 2 **caractérisé en ce qu'**un deuxième moyen de fixation (25) est positionné dans ladite gorge (24), ledit deuxième moyen de fixation (25) recevant ledit tenon (18).

4. Dispositif redresseur (2) selon la revendication 3 **caractérisé en ce que** ledit deuxième moyen de fixation (25) présente un bossage.

5. Dispositif redresseur (2) selon l'une des revendications précédentes **caractérisé en ce que** ledit premier moyen de fixation (15) est une vis.

6. Dispositif redresseur (2) selon l'une des revendications précédentes **caractérisé en ce que** ladite plateforme de recouvrement (16) est en matériau composite.

7. Dispositif redresseur (2) selon l'une des revendications précédentes **caractérisé en ce qu'**il comporte une pluralité d'aubes (9) disposées radialement aux dites virole interne (6) et virole externe (5).

8. Turbomachine (1) **caractérisée en ce qu'**elle comporte un dispositif redresseur (2) conforme à l'une au moins des revendications précédentes.

9. Procédé d'assemblage d'un dispositif redresseur (2) selon l'une des revendications 2 à 8 dans une turbomachine, ledit procédé d'assemblage comportant les étapes successives suivantes :
- positionner (101) lesdits deuxièmes orifices (14) desdites plateformes de fixation (11) desdites au moins deux aubes (9) en regard desdits premiers orifices (13) ;
- maintenir (102) lesdites plateformes de fixation (11) sur au moins une desdites virole interne (6) ou virole externe (5) avec ledit au moins un premier moyen de fixation (15) ;
- insérer (103) ledit tenon (18) de ladite plateforme de recouvrement (16) dans ladite gorge (24) dudit anneau (23) ;
- solidariser (104) ladite au moins une première virole (6) ou deuxième virole (5), lesdites plateformes de fixation (11) et ladite plateforme de recouvrement (16) avec ledit au moins un moyen de fixation (15).

10. Procédé d'assemblage selon la revendication 9 **caractérisé en ce qu'**il comporte, préalablement à ladite étape d'insertion (103), une étape de positionnement (105) d'un deuxième moyen de fixation (15).

## Patentansprüche

1. Aufrichtvorrichtung (2) für Turbomaschine (1), umfassend:
- einen internen Ring (6) und einen externen Ring (5), der den genannten internen Ring (6) umgibt, wobei der genannte interne Ring (6) und der genannte externe Ring (5) einen Kanal (8) bilden, wobei wenigstens einer der genannten internen Ringe (6) oder der externen Ringe (5) erste Öffnungen (13) aufweist;
- wenigstens zwei Aufricht-Rotorblätter (9), umfassend jeweils an wenigstens einem und demselben ersten Ende (10) eine Befestigungsplattform (11), die zweite Öffnungen (14) aufweist, die gegenüber den genannten ersten Öffnungen (13) positioniert sind; wobei die genannten wenigstens zwei Rotorblätter (9) an wenigstens einem der genannten interne Ringe (6) oder externen Ringe (5) durch wenigstens ein erstes Befestigungsmittel (15) zusammengebaut sind, das in die genannten ersten Öffnungen (13) und die genannten zweiten Öffnungen (14) eingeführt ist;
- eine Abdeckplattform (16), die das genannte wenigstens eine erste Befestigungsmittel (15) abdeckt, wobei die genannte Abdeckplattform (16) eine obere Oberfläche umfasst, die eine Abdeckebene (17) bildet, an der Luft zirkuliert; wobei die genannte Abdeckebene (17) eine angepasste Form besitzt, um das Profil des genannten Kanals (8) anzunehmen;
- wobei die genannte Aufrichtvorrichtung (2) **dadurch gekennzeichnet ist, dass** die genannte Abdeckplattform (16) eine untere Oberfläche umfasst, die eine Befestigungsebene (19) bildet, wobei die genannte Befestigungsebene (19) wenigstens eine Einkerbung (22) umfasst, die geeignet ist, mit dem genannten wenigstens einen Befestigungsmittel (15) zusammenzuwirken, um das Festhalten der genannten Abdeckplattform (16) zu gewährleisten.

2. Aufrichtvorrichtung (2) gemäß dem voranstehenden Anspruch, **dadurch gekennzeichnet, dass** die genannte Abdeckplattform (16) einen Bolzen (18) umfasst, der an einem vorgeschalteten Ende (16') der genannten Abdeckplattform (16) angeordnet ist, wobei der genannte Bolzen (18) in eine Auskehlung (24) eingefügt ist, die ein mit dem genannten internen Ring (6) oder dem genannten externen Ring (5) fest verbundenes Element (23) umfasst.

3. Aufrichtvorrichtung (2) gemäß Anspruch 2, **dadurch gekennzeichnet, dass** ein zweites Befestigungsmittel (25) in der genannten Auskehlung (24) positioniert ist, wobei das genannte zweite Befestigungsmittel (25) den genannten Bolzen (18) aufnimmt.

4. Aufrichtvorrichtung (2) gemäß Anspruch 3, **dadurch gekennzeichnet, dass** das genannte zweite Befestigungsmittel (25) eine Nocke aufweist.

5. Aufrichtvorrichtung (2) gemäß einem der voranstehenden Ansprüche, **dadurch gekennzeichnet, dass** das genannte erste Befestigungsmittel (15) eine Schraube ist.

6. Aufrichtvorrichtung (2) gemäß einem der voranstehenden Ansprüche, **dadurch gekennzeichnet, dass** die genannte Abdeckplattform (16) aus Verbundmaterial ist.

7. Aufrichtvorrichtung (2) gemäß einem der voranstehenden Ansprüche, **dadurch gekennzeichnet, dass** sie eine Vielzahl von Rotorblättern (9) umfasst, die radial zu dem genannten internen Ring (6) und dem genannten externen Ring (5) angeordnet sind.

8. Turbomaschine (1), **dadurch gekennzeichnet, dass** sie eine Aufrichtvorrichtung (2) gemäß wenigstens einem der voranstehenden Ansprüche umfasst.

9. Montageverfahren einer Aufrichtvorrichtung (2) gemäß einem der Ansprüche 2 bis 8 in einer Turbomaschine, wobei das genannte Montageverfahren die folgenden sukzessiven Schritte umfasst:
- Positionieren (101) der genannten zweiten Öffnungen (14) der genannten Befestigungsplattformen (11) der genannten wenigstens zwei Rotorblätter (9) gegenüber den genannten ersten Öffnungen (13);
- Festhalten (102) der genannten Befestigungsplattformen (11) auf wenigstens einem der genannten internen Ringe (6) oder externen Ringe (6) mit dem genannten wenigstens einen ersten Befestigungsmittel (15);
- Einfügen (103) des genannten Bolzens (18) der genannten Abdeckplattform (16) in die genannte Auskehlung (24) des genannten Bügels (23);
- feste Befestigung (104) des genannten wenigstens einen ersten Rings (6) oder zweiten Rings (5), der genannten Befestigungsplattformen (11) und der genannten Abdeckplattform (16) mit dem genannten wenigstens einen Befestigungsmittel (15).

10. Montageverfahren gemäß Anspruch 9, **dadurch gekennzeichnet, dass** es vor dem genannten Einfügungsverfahren (103) einen Positionierungsschritt (105) eines zweiten Befestigungsmittels (15) umfasst.

## Claims

1. Flow straightener device (2) for a turbomachine (1) comprising:
- an inner shell ring (6) and an outer shell ring (5) surrounding said inner shell ring (6), said inner shell ring (6) and said outer shell ring (5) forming a stream (8), at least one of said inner shell ring (6) or outer shell ring (5) having first orifices (13);
- at least two straightener blades (9) each comprising at at least one first end (10) an attachment platform (11) having second orifices (14) positioned facing said first orifices (13); said at least two blades (9) being assembled at at least one of said inner shell ring (6) or outer shell ring (5) by at least one first attachment means (15) introduced in said first orifices (13) and said second orifices (14);
- a covering platform (16) covering said at least one first attachment means (15), said covering platform (16) comprising an upper surface forming a covering plane (17) at the level of which air circulates; said covering plane (17) having a shape suited to follow the profile of said stream (8);
said flow straightener device (2) being **characterized in that** said covering platform (16) comprises a lower surface forming an attachment plane (19), said attachment plane (19) comprising at least one slot (22) suited to cooperate with said at least one first attachment means (15) to ensure retention of said covering platform (16).

2. Flow straightener device (2) according to the preceding claim, **characterized in that** said covering platform (16) comprises a lug (18) situated at an upstream end (16') of said covering platform (16), said lug (18) being inserted in a groove (24) which is comprised by an element (23) integral with said inner shell ring (6) or said outer shell ring (5).

3. Flow straightener device (2) according to Claim 2, **characterized in that** a second attachment means (25) is positioned in said groove (24), said second attachment means (25) receiving said lug (18).

4. Flow straightener device (2) according to Claim 3, **characterized in that** said second attachment means (25) has a boss.

5. Flow straightener device (2) according to one of the preceding claims, **characterized in that** said first attachment means (15) is a screw.

6. Flow straightener device (2) according to one of the preceding claims, **characterized in that** said covering platform (16) is of composite material.

7. Flow straightener device (2) according to one of the preceding claims, **characterized in that** it comprises a plurality of blades (9) arranged radially to said inner shell ring (6) and outer shell ring (5).

8. Turbomachine (1), **characterized in that** it comprises a flow straightener device (2) according to at least one of the preceding claims.

9. Assembly method of a flow straightener device (2) according to one of Claims 2 to 8 in a turbomachine, said assembly method comprising the following successive steps:
- positioning (101) said second orifices (14) of said attachment platforms (11) of said at least two blades (9) facing said first orifices (13);
- holding (102) said attachment platforms (11) on at least one of said inner shell ring (6) or outer shell ring (5) with said at least one first attachment means (15);
- inserting (103) said lug (18) of said covering platform (16) in said groove (24) of said ring (23);
- integrating (104) said at least one first shell ring (6) or second shell ring (5), said attachment platforms (11) and said covering platform (16) with said at least one attachment means (15).

10. Assembly method according to Claim 9, **characterized in that** it comprises, prior to said insertion step (103), a positioning step (105) of a second attachment means (15).
